# EUROPEAN PATENT APPLICATION

(11) **EP 0 535 779 A1**
(43) Date of publication of application: **07.04.1993**
(21) Application number: 92305160.1
(22) Date of filing: 05.06.1992
(51) Int. Cl.: G11B 15/02, G11B 5/008

(54) **A method of recording and reproducing for a tape recorder**

(30) Priority: 30.09.1991 JP 252078/91
(71) Applicant: PIONEER ELECTRONIC CORPORATION, Meguro-ku Tokyo 153 (JP)
(72) Inventor: Furuta, Yoshiki, c/o Pioneer Elec. Corporation, Tokorozawa-shi, Saitama (JP)
(74) Representative: Brunner, Michael John

(57) **Abstract**

A method of reproducing information in a tape recorder having a reversible head (10) is described in which the temporary absence of reproduced information between tape sides (A,B) due to the process of reversing the head is eliminated. Additionally, a method of recording information on a tape in a tape recorder having a reversible head (10), is described, in which no recorded information is lost during a midpoint blank interval between tape sides during which the head is reversed.

## Description

The present invention relates to a reproducing and recording method for a digital tape recorder having a reversible head for reverse reproducing and reverse recording on both sides of a tape.

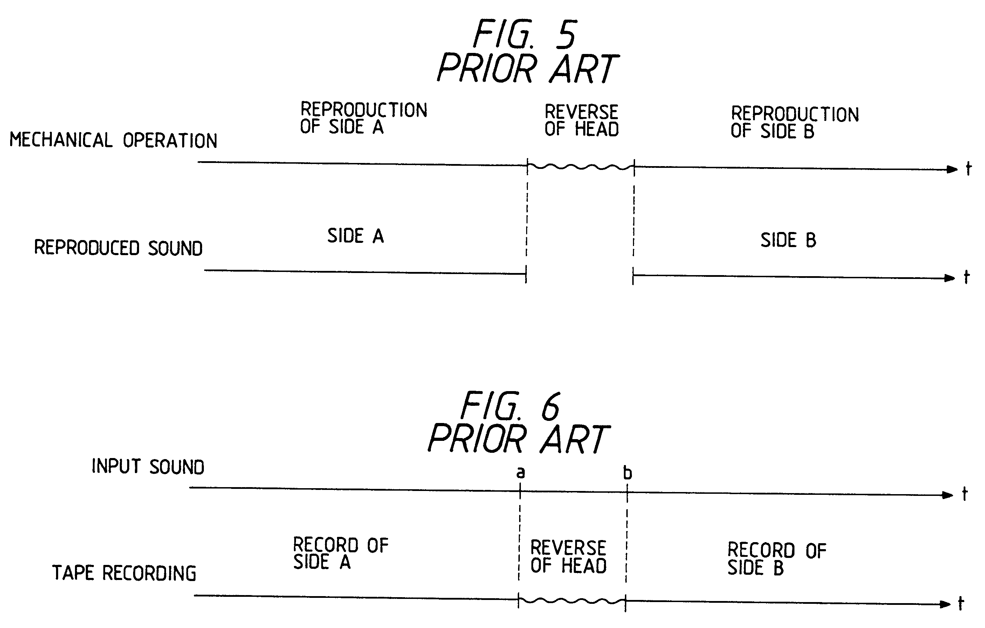

Figure 5 is a timing chart in which a reproducing operation of a conventional tape recorder having a reversible head is illustrated. As shown in Figure 5, when a tape having information, for example audio, recorded on both sides A (first side) and B (second side) is continuously reproduced in the conventional tape recorder, and the head is reversed upon reaching the end of side A, the reproduced information is temporarily interrupted until reproduction of the information on side B is begun. Thus, for the example of audio tape playback, a listener must wait during the transition period between forward playback of side A and the reverse playback of side B.
Figure 6 is a timing chart in which a recording operation of the conventional tape recorder having a reversible head is illustrated. As shown in Figure 6, to continuously record information on both sides of a tape using the conventional tape recorder an operator must recognize that no sound can be recorded between points a and b. The interval between these points is defined by the time during which the head is reversed at the end of side A and the time at which recording on side B is begun. This interval, or midpoint blank, often causes the loss of recorded information where an operator fails to correctly judge the end of side A.

The present invention has been made in view of the above circumstances. Accordingly, the present invention eliminates the blank audio playback which typically occurs at the end of one tape side while the tape recorder reverses the head to begin reverse reproduction of the other tape side. In this manner, the temporary absence of sound between forward reproduction and reverse reproduction does not occur. Similarly, the present invention eliminates the midpoint blank which typically occurs when a recording operation overlaps the end of one tape side. Thus, no recorded information is lost during the process of reversing the head to continue recording on the other tape side.
Thus, an object of the invention is to provide a tape recorder free from not only the absence of sound due to reverse of the head during reverse reproduction, but also a midpoint blank of recording content due to reverse of the head during continuous recording on both sides of a tape.
To achieve the above object, a first aspect of the invention is applied to a method of reproducing information in a tape recorder having a reversible head, comprising the steps of; reproducing digital data from a first side of a tape, providing a buffer memory having a storage capacity sufficient to store at least a quantity of digital data corresponding to a time interval during which reproduction of the information is interrupted due to reversing of the head, storing the reproduced digital data in the buffer memory during reproduction of a first side of the tape, and outputting the digital data stored in the buffer memory while the head is being reversed to begin reproducing digital data from a second side of the tape.
A second aspect of the invention is applied to a method of recording information on a tape in a tape recorder having a reversible head, comprising the steps of; generating digital data in accordance with the information to be recorded on the tape, providing a buffer memory having a storage capacity sufficient to store at least a quantity of digital data corresponding to a time interval during which recording of the information is interrupted due to reversing of the head, storing the digital data in the buffer memory, wherein digital data continues to be stored in the buffer memory during a period of time in which the head is reversed, outputting the digital data to a first side of the tape, stopping the output of the digital data during the period of time in which the head is reversed, outputting the digital data to a second side of the tape upon completion of the period of time in which the head is reversed.

The accompanying drawings, which are incorporated in and constitute a part of this specification, illustrate embodiments of the invention and, together with the description, serve to explain the objects advantages and principles of the invention. In the drawings:
Figure 1 is a block diagram showing an embodiment of a reproducing system configured in accordance with the invention;
Figure 2 is a timing chart showing a playback operation of the embodiment shown in Figure 1;
Figure 3 is a block diagram showing an embodiment of a recording system configured in accordance with the invention;
Figure 4 is a timing chart showing a recording operation of the embodiment shown in Figure 3;
Figure 5 is a timing chart showing a convention reproducing operation; and
Figure 6 is a timing chart showing a conventional recording operation.

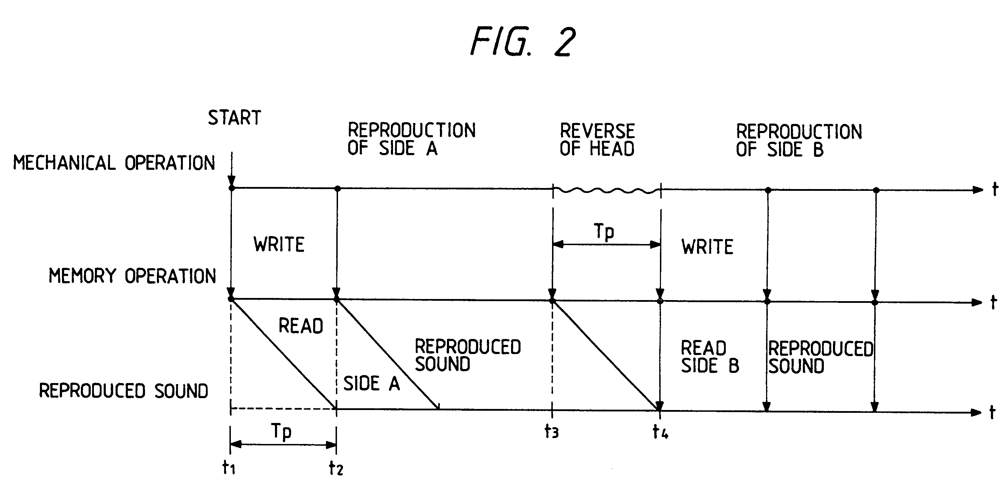

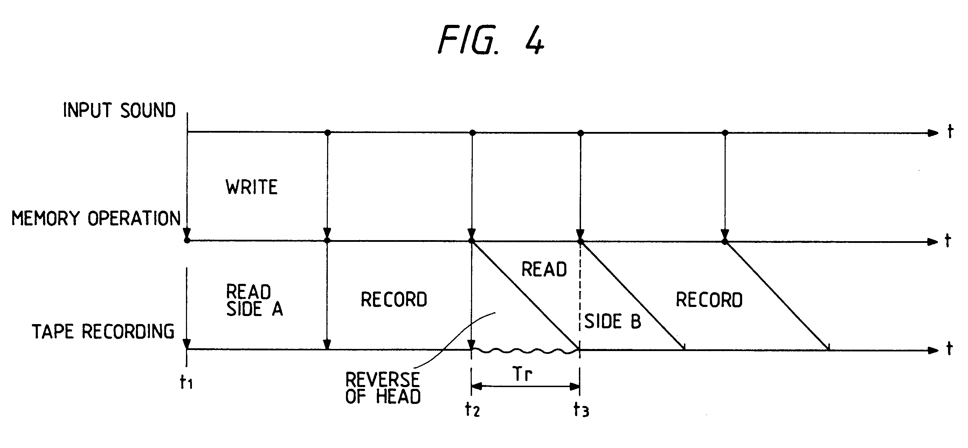

Embodiments of the present invention will be hereafter described with reference to the drawings.

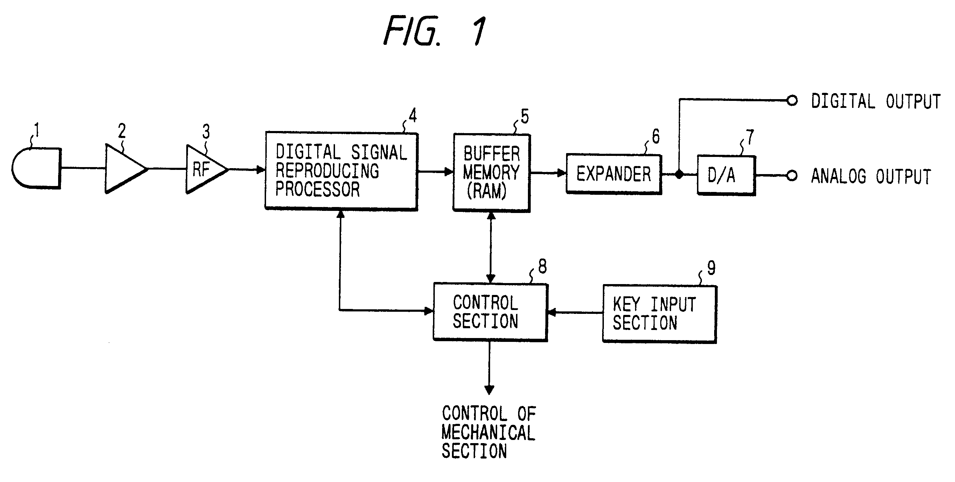

Figure 1 shows a first embodiment of the present invention applied to a reproducing system in a digital tape recorder. In Figure 1, reference numeral 1 designates a digital reproducing head for reading digital data, such as recorded digital audio, from a digital recording tape; 2, designates a head amplifier; 3, designates an RF (radio frequency) amplifier; 4, designates a digital signal reproducing processor for decoding the read digital data; and 5, designates a buffer memory for temporarily storing the decoded digital data. The digital signal reproducing processor 4 may incorporate a compression process, or comprise a separate digital data compressor which serves to encode the read digital data for efficient storage in buffer memory 5.
The buffer memory 5 has a storage capacity at least large enough to store digital data equal to or greater than the quantity of digital data normally reproduced during the time interval Tₚ shown in Figure 2. This quantity of data is a product of the time interval Tₚ and the data rate(s) at which the tape recorder/reproducer takes digital data from the digital tape. Time interval Tₚ approximates the period during which reproduced sound is temporarily absent due to reverse of the head (hereafter referred to as the "sound absence time interval"). The buffer memory 5 may be comprised, for example, of a FIFO (first in, first out) type dual port-RAM (random access memory).
Reference numeral 6 designates an expander which restores the recorded digital data to its original bit-length and form, assuming that the digital data has been compressed; 7, a D/A (digital to analog) converter; 8, a control section for controlling the processing in the overall method; and 9, a key input section.
An operation of the first embodiment will be described with reference to the timing chart shown in Figure 2. A digital recording tape on which information, such as music or the like, is recorded is installed in a mechanical section, not shown, and a playback command is input through key input section 9. Accordingly, reproduction of the digital recording tape is started at time t₁ in Figure 2.
The digital data read by digital reproducing head 1 is sent to the digital signal reproducing processor 4 through head amplifier 2 and RF amplifier 3 for decoding, and the decoded data is then sent to buffer memory 5. The control section 8 supervises address control for buffer memory 5 so that the digital data is sequentially stored at predetermined memory addresses within buffer memory 5.
As can be seen by the timing illustrations of Fig 2, control section 8 causes data from tape side A (first side) to be read and stored in buffer memory 5 beginning at reproduction start time t₁. However, during a period of time approximated by the sound absence time interval, Tₚ, no digital data is taken from buffer memory 5. Thus, between t₁ and t₂ in Figure 2, no information is output, rather digital data sufficient to reproduce information through the eventual sound absence time interval, Tₚ, is accumulated. Assuming, for example, that the sound absence time interval, Tₚ, is equal to 2 seconds and that the reproduced information is digital audio, a listener beginning audio play back of side A would wait 2 seconds for audio playback to begin, but would not subsequently hear the audio tape playback interrupted between tape sides.
Accordingly, when a track of digital data equivalent to the sound absence time interval Tₚ has been read into buffer memory 5, control section 8 starts at t₂ to read digital data from buffer memory 5 while continuing to sequentially store digital data in buffer memory 5. That is, digital data sent from the digital signal reproducing processor 4 is stored sequentially in the buffer memory 5, while at the same time, digital data stored in the buffer memory 5 is read and output by a FIFO method to the output sections shown in Figure 1.
Expander 6 restores compressed digital data back into its original bit-length form and outputs the restored data as a digital playback signal from a digital output terminal. Additionally or alternatively, the restored digital data is converted into an analog signal by the D/A converter 7 and output as an analog playback signal from an analog output terminal. Accordingly, after timing t₂ at which a period equivalent to the sound absence time interval Tₚ has elapsed, the playback sound is output.
When the reproduction of side A has ended at time t₃ and reverse of the head is started for the reproduction of side B, there is no transmission of digital data from the digital reproducing head 1 until the sound absence time interval Tₚ elapses. While the reproduced sound is absence during the time interval Tₚ in the conventional example, the present invention has loaded and delayed the output of a quantity of digital data equivalent to the sound absence time interval Tₚ in buffer memory 5. Therefore, the digital data loaded in buffer memory 5 is read out and supplied to expander 6 under the direction of the control section 8 during the sound absence time interval Tₚ. As a result, the reproduced sound is continuously output without the typical absence of information during the sound absence time interval Tₚ.
At time t₄, the digital data stored in the buffer memory 5 has run out and the reverse of the head has been completed so that the digital reproducing head 1 starts reading digital data from side B (second side). The digital data on side B read by digital reproducing head 1 is stored in buffer memory 5. As buffer memory 5 has run out, or nearly run out, of digital data stored from side A the digital data from side B stored in buffer memory 5 is immediately, or near immediately, read out in sequence by the FIFO method employed by buffer memory 5 and sent to expander 6. Thus, after time t₄ the present invention reads digital data from side B, stores the digital data in buffer memory 5 and sequentially outputs the information from side B. As a result, the reproduced information is not interrupted during the sound absence time interval Tₚ.

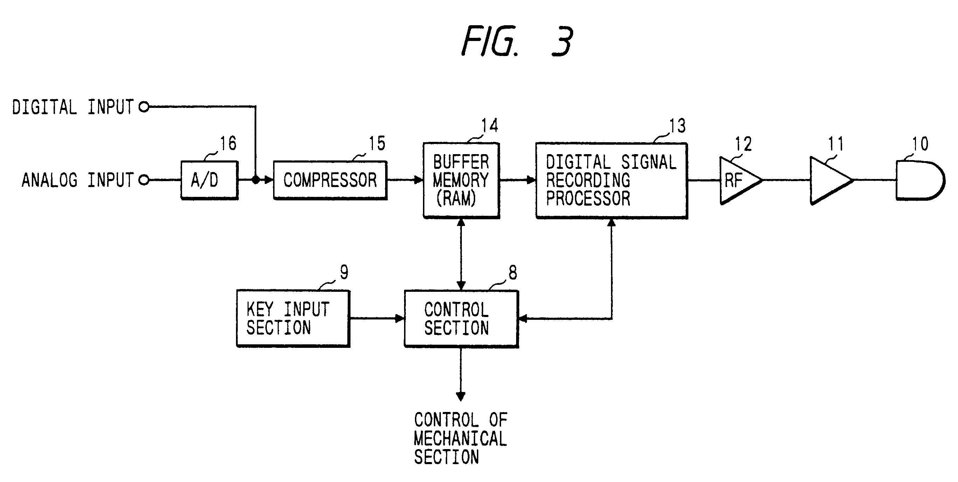

Figure 3 shows a second embodiment of the present invention as applied to the recording system of a digital tape recorder. In Figure 3, reference numeral 10 designates a digital recording head for recording digital data, such as audio, on a digital recording tape; 11, a recording amplifier; 12, a RF amplifier; 13, a digital signal recording processor for converting digital data into a format suitable for recording; and 14, a buffer memory for temporarily storing digital data to be recorded.
The buffer memory 14 has a storage capacity at least large enough to store digital data equal to or greater than the quantity of digital data normally recorded during time interval equivalent to Tᵣ shown in Figure 4. This quantity of digital data is a product of the time interval Tᵣ and the data rate(s) at which the recording/reproducing tape recorder takes digital/analog data. During this midpoint blank interval, Tᵣ, no input information is recorded on the digital tape due to reverse of the head (hereafter referred to as the "midpoint blank time interval"). Buffer memory 14 may be comprised, for example, of a FIFO type dual port RAM. In the case of a recording/reproducing tape recorder, buffer memory 5 shown in Figure 1 also may be used as this buffer memory 14. In this case, the memory storage capacity of the dual purpose buffer memory may be selected to accommodate a larger storage volume of digital data.
Reference numeral 15 designates a compressor that compresses the input digital data; 16, an A/D (analog to digital) converter; 8, a control section for controlling the general method of overall processing; and 9, a key input section.
Operation of this second embodiment will be described with reference to the timing chart shown in Figure 4. A digital recording tape for recording information, such as music or the like, is installed into a mechanical section, not shown, and a recording start command is input through the key input section 9. Accordingly, digital recording is started at time t₁ shown in Figure 4.
The recording digital data is directly applied to the compressor 15. A recording analog signal is converted into digital data at the A/D converter 16 before being input to compressor 15. Compressor 15 compresses the recording digital data in accordance with a predetermined format and sends the compressed data to buffer memory 14.
The control section 8 handles address control for buffer memory 14 and sequentially stores the digital data from compressor 15. Digital data read in the buffer memory 14 is immediately read and output by the FIFO method employed by buffer memory 14. Digital data read from the buffer memory 14 is sent to digital signal recording processor 13, converted into a format suitable for recording, thereafter, sent to digital recording head 10 through RF amplifier 12 and recording amplifier 11, and finally digitally recorded on digital recording tape.
When recording on side A is completed at time t₂ and the reverse of the head is started in order to continue recording on side B, digital data can no longer be immediately recorded from the digital recording head 10 during the midpoint blank time interval Tᵣ. However, the input information, for example audio, can continue to be input and sequentially applied to buffer memory 14 during this interval Tᵣ. Conventionally, digital data corresponding to the information input during the midpoint blank time interval Tᵣ has been discarded and never recorded.
In the present invention, recording digital data to be input during the midpoint blank time interval Tᵣ is sequentially stored in buffer memory 14. Thus at time t₂, the process of reading digital data from buffer memory 14 is interrupted and only the process of digital data input and storing are performed. Accordingly, the digital data input during the midpoint blank time interval Tᵣ is loaded into buffer memory 14.
At time t₃, that is following completion of the midpoint blank time interval Tᵣ, the operation of reversing the head has been completed and digital recording head 10 is again ready to begin recording of digital data on side B. Thus at time t₃, the process of reading digital data from buffer memory 14 is resumed by the FIFO method. Thus, the digital data stored in buffer memory 14 from time t₂ and digital data input thereafter is recorded on side B beginning at time t₃. Therefore, the present invention, prevents the loss of input information during the midpoint blank time interval Tᵣ in which no recording has heretofore been possible, the head was being reversed.
The embodiments of the present invention described above have been presented for purposes of illustration and description. The application of the invention is not limited to digital tape recorders; the invention may be applied to conventional analog tape recorders as well. In this case, an A/D converter and a D/A converter are provided before and after the buffer memory, respectively. Further, while buffer memory 5 of the reproducing system shown in Figure 1 is provided before the expander 6 and buffer memory 14 of the recording system shown in Figure 3 is provided after compressor 15, respectively, buffer memory 5 may be provided after expander 6 and buffer memory 14 may be provided before compressor 15 as long as it is acceptable to increase the storage capacity.
Further, the invention can achieve endless playback without the absence of reproduced sound at all times even, e.g., at the time of switching the tape from side A to side B during endless playback, if the reproduced signals are reproduced while temporarily storing the reproduced signals in a buffer memory for every inter-music blank or every playback operation start of side A. As is apparent from the foregoing description, according to the reproducing and recording method of the present invention, the absence of the sound due to reverse of the head during reverse reproduction and a midpoint blank of recording content due to reverse of the head during the reverse recording can be prevented.

The foregoing embodiments are not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A method of reproducing information in a tape recorder having a reversible head (1), comprising the steps of:
reproducing (1-3) data from a first side (A) of a tape;
storing the reproduced data in a buffer memory (5) during reproduction of the first side of the tape, the buffer memory having a storage capacity sufficient to store at least a quantity of data corresponding to a time interval during which reproduction of the information is interrupted due to reversing of the head; and
outputting (6,7) the data stored in the buffer memory while the head is being reversed, to begin reproducing data from a second side (B) of the tape.

2. A method of reproducing data recorded on first and second sides of a tape in a tape recorder having a reversible head (1), wherein a process of reversing the head requires a predetermined time interval, the method comprising the steps of:
reproducing (1-3) data recorded on the first side (A) of the tape at a predetermined rate;
storing the reproduced data in a buffer memory (5) having a storage capacity sufficient to store at least a quantity of data reproduced at the predetermined rate during the predetermined time interval;
outputting (6,7) the stored data from the buffer memory following a delay equal to the predetermined time interval; and
reversing the head (1) upon completion of reproducing data recorded on the first side of the tape, wherein data from the first side (A) of the tape is output from the buffer memory (5) during reversing the head.

3. A method according to claim 1 or claim 2, wherein the data is digital data and the tape recorder is a digital tape recorder.

4. A method according to claim 3, further comprising the step of expanding (6) the stored digital data before or after the step of outputting the stored digital data.

5. A method according to claim 4, further comprising the step of converting (7) the expanded digital data into a corresponding analog signal before the step of outputting the stored digital data.

6. A method of recording information on a tape in a tape recorder having a reversible head (10), comprising the steps of:
generating (16,15) data in accordance with the information to be recorded on the tape;
storing the digital data in a buffer memory (14), having a storage capacity sufficient to store at least a quantity of data corresponding to a time interval during which recording of the information is interrupted due to reversing of the head, wherein data continues to be stored in the buffer memory during a period of time in which the head is reversed;
outputting (12,11,10) the data to a first side (A) of the tape;
stopping the output of the data during the period of time in which the head is reversed; and
outputting (12,11,10) the data to a second side (B) of the tape upon completion of the period of time in which the head is reversed.

7. A method of recording data on a first side and a second side of a tape, on a tape recorder having a reversible head (10) wherein a process of reversing the head requires a predetermined time interval, the method comprising the steps of:
storing the data in a buffer memory (14) having a storage capacity sufficient to store at least a quantity of data corresponding to the predetermined time interval;
outputting (12,11,10) the stored data from the buffer memory;
recording a signal corresponding to the output data on the first side (A) of the tape;
stopping the output of the stored data and the recording of the signal during the predetermined time interval;
reversing the head upon completion of recording the signal on the first side of the tape;
resuming output of the stored data from the buffer memory following the completion of the predetermined time interval; and
recording a signal corresponding to the output data on the second side of the tape.

8. A method according to claim 6 or claim 7, wherein the data is digital data and the tape recorder is a digital tape recorder.

9. A method according to claim 8, further comprising the step of compressing the data before or after storing data.

10. A method according to claim 8 or claim 9, further comprising the step of converting an analog data signal into a corresponding digital data signal before or after storing the data.
